# EUROPEAN PATENT APPLICATION

(11) **EP 3 257 382 A1**
(43) Date of publication of application: **20.12.2017**
(21) Application number: 16382273.7
(22) Date of filing: 14.06.2016
(51) Int. Cl.: A23L 3/18, A23C 3/037, A23L 2/46, A23B 7/005, A23B 9/02, A23C 11/10

(54) **STERILIZATION PROCESS FOR STERILIZING LIQUID VEGETABLE FOOD PRODUCTS**

(71) Applicant: Liquats Vegetals SA, Girona (ES)
(72) Inventor: ERRA SERRABASA, Josep Maria, 17430 Santa Coloma de Farners (ES)
(74) Representative: Juncosa Miro, Jaime

(57) **Abstract**

The sterilization process comprises determining an inlet concentration which the liquid product (P) to be sterilized must have in order to obtain the sterilized liquid product (P) at a target outlet concentration taking into account an amount of water that will be added to the liquid product (P) by injection of steam (V) during the sterilization process, and introducing the liquid product (P) to be sterilized into an inlet of a sterilization circuit (10) at the inlet concentration. Then heating the liquid product (P) to a sterilization temperature by means of the injection of steam (V), optionally keeping the liquid product (P) at the sterilization temperature for a preestablished hold time, and cooling the sterilized liquid product (P).

## Description

### Field of the Art

The present invention relates to a sterilization process useful for sterilizing vegetable liquid food products, such as for example soy-, oat-, rice- and almond-based drinks, among others, in which one of the ingredients is water.

### Background of the Invention

In the field of the production of vegetable liquid food products, such as soy-, oat-, rice-and almond-based drinks, among others, an ultra-high temperature, known as UHT, sterilization process is known, which consists of initially heating the liquid product at a sterilization temperature, keeping the liquid product at the sterilization temperature for a predetermined time, and finally cooling the liquid product at a temperature close to room temperature.

The hold time, i.e., the time during which the liquid product is kept at the sterilization temperature, is established in each case depending on various factors, which include the nature of the liquid product to be sterilized and the sterilization temperature at which it is held, and this may vary from around one second up to one minute or more.

The combination of the sterilization temperature and the hold time results in sterilization of the liquid product, i.e., in inactivation of enzymes and viable microorganisms together with their spores. A liquid food product thus sterilized and vacuum packed can keep for a long time without spoiling.

The UHT sterilization process provides for several variants, the two most widely used of which are a process called "indirect UHT" and a process called "direct UHT", each of which has advantages and drawbacks.

### INDIRECT UHT PROCESS

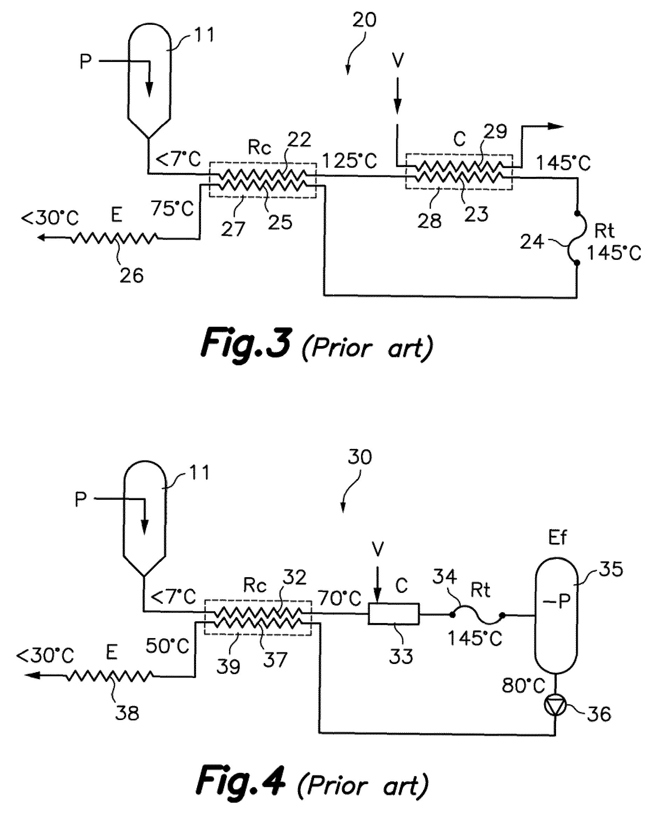

The indirect UHT sterilization process of the prior art is described below with reference to Figure 3. The indirect UHT process is performed continuously using an open sterilization circuit 20 provided with an inlet and an outlet (indicated by means of arrows in Figure 3), and essentially comprises the following steps.

First, the liquid product P to be sterilized is introduced into the sterilization circuit 20 at a relatively low inlet temperature, generally less than 7°C, for example 4°C, through an inlet tank 21.

Then the liquid product P passes through a first heat exchanger 27 where a heat recovery step Rc takes place by heat exchange between the recently introduced liquid product P, which circulates through a conduit 22 and is at the inlet temperature less than 7°C, and an already sterilized liquid product P, which is led towards the outlet of the sterilization circuit 20 through a conduit 25 and is at a sterilization temperature, for example 145°C, as described below. By means of this heat recovery step Rc, the temperature of the recently introduced liquid product P increases from the inlet temperature less than 7°C to an increased temperature, for example 125°C.

Next, the liquid product P coming from the first heat exchanger 27 passes through a second heat exchanger 28 where a heating step C takes place by heat exchange between a high-temperature fluid, such as, for example, steam V, or water or another fluid overheated by steam or by another system, circulating through a conduit 29, and the liquid product P circulating through a conduit 23. By means of this heating step C, the temperature of the liquid product P increases from the increased temperature, 125°C in this example, to the sterilization temperature, 145°C in this example.

The liquid product P coming from the second heat exchanger 28 then passes through a holding cell 24 where the liquid product P is subjected to a temperature holding step Rt consisting of maintaining the sterilization temperature reached in the heating step C, which is 145°C in this example, for a pre-established hold time. The heating step C and this temperature holding step Rt in combination bring about sterilization of the liquid product P.

Then, the liquid product P coming from the holding cell 24 passes through the first heat exchanger 27 again where the aforementioned heat exchange takes place between the sterilized liquid product P, which circulates through the conduit 25 and is at the sterilization temperature, 145°C in this example, and the recently introduced liquid product P, which circulates through the conduit 22 and is at the inlet temperature less than 7°C. This heat exchange causes cooling in the sterilized liquid product P from the sterilization temperature, 145°C in this example, to a reduced temperature, for example 75°C, and the heat lost through the sterilized liquid product P is transferred to the recently introduced liquid product P, which experiences the increase in temperature described above in relation to the heat recovery step Rc.

Finally, the sterilized liquid product P is led from the first heat exchanger 27 to the outlet of the sterilization circuit 20 through a cooling device 26 where the liquid product P experiences a cooling step E whereby it is cooled from the reduced temperature, in this example 75°C, to an outlet temperature close to room temperature, and generally less than 30°C.

The indirect UHT sterilization process can further include a homogenizer (not depicted in Figure 3) at the inlet, at the outlet or at any other point of the sterilization circuit 10.

It must be pointed out that the temperature profile described above and shown in Figure 3 is provided only by way of theoretical example and is merely illustrative.

### Advantages of the indirect UHT process:

- The steam does not come into contact with the liquid product. Accordingly, the liquid product is not diluted.
- It is more energy efficient (compared with the direct UHT process). An approximate 80% heat recovery rate is obtained.
- Volatile components are not extracted from the liquid product. Accordingly, the liquid product maintains its original flavor and aroma.

### Drawbacks of the indirect UHT process:

- More burnt product (compared with the direct UHT process). This is observed in the aroma and in the flavor, and accordingly a lower-quality liquid product is produced.
- Greater fouling of the inside of the conduits of the sterilization circuit (compared with the direct UHT process). Accordingly, longer installation maintenance and cleaning times are required, resulting in lower operating time.

This indirect UHT process is favorable, for example, for preparing oat-, rice- or almond-based liquid products, since it maintains their original pleasant flavor and aroma, but it is not favorable, for example, for soy-based liquid products, because it does not eliminate its original flavor and aroma, which are considered unpleasant.

### DIRECT UHT PROCESS

The direct UHT sterilization process of the prior art is described below with reference to Figure 4. The direct UHT process is performed continuously using an open sterilization circuit 30 provided with an inlet and an outlet (indicated by means of arrows in Figure 4), and essentially comprises the following steps.

First, the liquid product P to be sterilized is introduced into the sterilization circuit 30 at a relatively low inlet temperature, generally less than 7°C, for example 4°C, through an inlet tank 31.

Then the liquid product P passes through a heat exchanger 39 where a heat recovery step Rc takes place by heat exchange between the recently introduced liquid product P, which circulates through a conduit 32 and is at the inlet temperature less than 7°C, and an already sterilized liquid product P, which is led towards the outlet of the sterilization circuit 30 through a conduit 37 and is at a sterilization temperature, for example 145°C, as described below. By means of this heat recovery step Rc, the temperature of the recently introduced liquid product P increases from the inlet temperature less than 7°C to an increased temperature, for example 70°C.

Next, the liquid product P coming from the heat exchanger 39 passes through a steam injector 33 through which steam V is injected into the conduit where the liquid product P circulates and the steam V is mixed with the liquid product P. By means of this injection of steam, a heating step C takes place whereby the temperature of the liquid product P increases from the increased temperature, 70°C in this example, to the sterilization temperature, 145°C in this example, while at the same time the liquid product P is diluted due to the effect of the added steam.

The liquid product P coming from the steam injector 33 then passes through a holding cell 34 where the liquid product P is subjected to a temperature holding step Rt consisting of maintaining the sterilization temperature reached in the heating step C, which is 145°C in this example, for a pre-established hold time. The heating step C and this temperature holding step Rt jointly bring about sterilization of the liquid product P.

Then, the liquid product P coming from the holding cell 34 is introduced into a flash evaporation tank 35, the inside of which is at a low pressure in relation to the pressure that was in the circuit in which the holding cell 34 is located. As a result of this low pressure, the liquid product P experiences a flash evaporation step Ef, consisting of a very rapid partial evaporation that removes the water added by means of the injection of steam together with the more volatile components of the liquid product P, and as a result of this evaporation the liquid product P experiences cooling from the sterilization temperature, 145°C in this example, to a post-evaporation temperature, for example 80°C.

From the outlet of the flash evaporation tank 35 the sterilized liquid product P is driven by a pump 36 and passes through the heat exchanger 39 again where the aforementioned heat exchange takes place between the sterilized liquid product P, which circulates through the conduit 37 and is at the post-evaporation temperature, 80°C in this example, and the recently introduced liquid product P, which circulates through the conduit 32 and is at the inlet temperature less than 7°C. This heat exchange causes cooling in the sterilized liquid product P from the post-evaporation temperature, 80°C in this example, to a reduced temperature, for example 50°C, and the heat lost through the sterilized liquid product P is transferred to the recently introduced liquid product P, which experiences the increase in temperature described above in relation to the heat recovery step Rc.

Finally, the sterilized liquid product P is led from the heat exchanger 39 to the outlet of the sterilization circuit 30 through a cooling device 38 where the liquid product P experiences a cooling step E whereby it is cooled from the reduced temperature, 50°C in this example, to an outlet temperature close to room temperature, and generally less than 30°C.

The direct UHT sterilization process can further include a homogenizer (not depicted in Figure 4) at the inlet, at the outlet or at any other point of the sterilization circuit 10.

It must be pointed out that the temperature profile described above and shown in Figure 4 is provided only by way of theoretical example and is merely illustrative.

### Advantages of the direct UHT process:

- Less burnt product (compared with the indirect UHT process). This is observed in the color and in the flavor, and accordingly a higher-quality liquid product is produced.
- Less fouling of the inside of the conduits of the sterilization circuit (compared with the indirect UHT process). Accordingly, lower installation maintenance and cleaning times are required, resulting in longer operating time.

### Drawbacks of the direct UHT process:

- The steam comes into contact with the liquid product. Accordingly, the liquid product is diluted in water.
- It is less energy efficient (compared with the indirect UHT process). Only an approximate 60% heat recovery rate is obtained.
- Volatile components are extracted from the liquid product. This eliminates the original flavor and aroma of the liquid product.

This direct UHT process is favorable, for example, for soy-based products, because it eliminates a flavor and an aroma that are considered unpleasant, but it is not favorable, for example, for oat-, rice-, or almond-based products, since it extracts their pleasant original flavor and aroma.

Based on the foregoing, an objective of the present invention is to provide a new sterilization process for sterilizing vegetable liquid food products that brings together the main advantages of both the indirect UHT process and the direct UHT process without suffering from their main drawbacks.

### Disclosure of the Invention

The present invention contributes to reaching the aforementioned and other objectives by providing a sterilization process for sterilizing vegetable liquid food products including water as one of their ingredients. The sterilization process of the present invention comprises the following steps:
First introducing a liquid product to be sterilized at an inlet temperature into an inlet of an open sterilization circuit.

Then, heating the liquid product to a sterilization temperature by the injection of steam into a conduit of the sterilization circuit where the liquid product circulates, whereby the liquid product is sterilized.

Finally, cooling the sterilized liquid product to an outlet temperature close to room temperature in a cooling device located before an outlet of the sterilization circuit.

It is noted that the sterilization process of the present invention does not include, as is conventional in the prior art, a flash evaporation step in which the liquid product experiences a very rapid partial evaporation removing an amount of water added to the liquid product by means of the injection of steam.

In contrast, in the sterilization process of the present invention, the amount of water that has been added to the liquid product in the steam injection step is maintained in the sterilized liquid product until the outlet of the sterilization circuit, and accordingly the sterilized liquid product that is obtained at the outlet of the sterilization circuit has a lower concentration than the liquid product to be sterilized that is introduced into the inlet of the sterilization circuit.

For this reason, the sterilization process of the present invention includes the additional steps of defining a target outlet concentration at which the sterilized liquid product is to be obtained at the outlet of the sterilization circuit, determining an inlet concentration at which the liquid product to be sterilized must be introduced into the sterilization circuit in order to obtain the sterilized liquid product at the target outlet concentration taking into account the amount of water that will be added to the liquid product by the injection of steam, and introducing the liquid product to be sterilized at the inlet concentration into the inlet of the sterilization circuit.

In a preferred embodiment, the process comprises keeping the liquid product at the sterilization temperature for a pre-established hold time in a holding cell of the sterilization circuit before cooling the liquid product at the outlet temperature.

Optionally, the sterilization process of the present invention includes a heat recovery step comprising heat exchange between the recently introduced liquid product that is at the inlet temperature in a cold exchanger conduit of the sterilization circuit and the sterilized liquid product that is at the sterilization temperature in a hot exchanger conduit of the sterilization circuit, which causes an increase in the temperature of the recently introduced liquid product from the inlet temperature to an increased temperature before the steam injection step and a reduction of the temperature of the sterilized liquid product from the sterilization temperature to a reduced temperature before the final cooling step.

The sterilization process of the present invention differs from the indirect UHT process in that it performs the heating step by the injection of steam instead of by heat transfer between a conduit through which the liquid product circulates and another conduit through which the steam circulates.

The sterilization process of the present invention differs from the direct UHT process in that it does not perform the flash evaporation step, but rather the liquid product coming from the holding cell is led directly to the outlet of the sterilization circuit, maintaining the amount of water added in the steam injection step.

Accordingly, the sterilization process of the present invention brings together the main advantages of both the indirect UHT process and the direct UHT process of the prior art and, however, does not present their main drawbacks.

### Advantages of the sterilization process of the present invention:

- It is more energy efficient (compared with the indirect UHT and direct UHT processes). An approximate 90% heat recovery rate is obtained if the optional heat recovery step is included.
- Volatile components are not extracted from the liquid product. Accordingly, the liquid product maintains its original flavor and aroma.
- Less burnt product (compared with the indirect UHT process). This is observed in the color and in the flavor, and accordingly produces a higher-quality liquid product.
- Less fouling of the inside of the conduits of the sterilization circuit (compared with the indirect UHT process). Accordingly, lower installation maintenance and cleaning times are required, resulting in a longer operating time.

A factor which could be considered a drawback in the prior art is that the steam comes into contact with the liquid product, and accordingly, the liquid product is diluted. Nevertheless, and taking into account that the entering liquid product generally comes from a concentrated liquid product, this dilution is readily offset by introducing the liquid product into the inlet tank with an inlet concentration higher than the usual inlet concentration in the direct UHT process of the prior art which includes injection of steam, such that the sterilized liquid product is obtained at the end of the sterilization process at the required final target concentration.

This new process is favorable, for example, for oat-, rice- or almond-based liquid products, since it maintains their original pleasant flavor and aroma as the liquid product is not subjected to a flash evaporation step.

In one embodiment, the sterilization process further includes a step of control of temperature before the injection of steam and a homogenization step preferably after the temperature holding step.

### Brief Description of the Drawings

The foregoing and other features and advantages will be better understood based on the following detailed description of an illustrative and non-limiting embodiment with reference to the accompanying drawings, in which:
Figure 1 is a schematic diagram of a sterilization process for sterilizing vegetable liquid food products according to an embodiment of the present invention;
Figure 2 is a schematic diagram of a sterilization process for sterilizing vegetable liquid food products according to another embodiment of the present invention;
Figure 3 is a schematic diagram of an indirect sterilization process for sterilizing vegetable liquid food products according to the prior art; and
Figure 4 is a schematic diagram of a direct sterilization process for sterilizing vegetable liquid food products according to the prior art.

### Detailed Description of an Embodiment

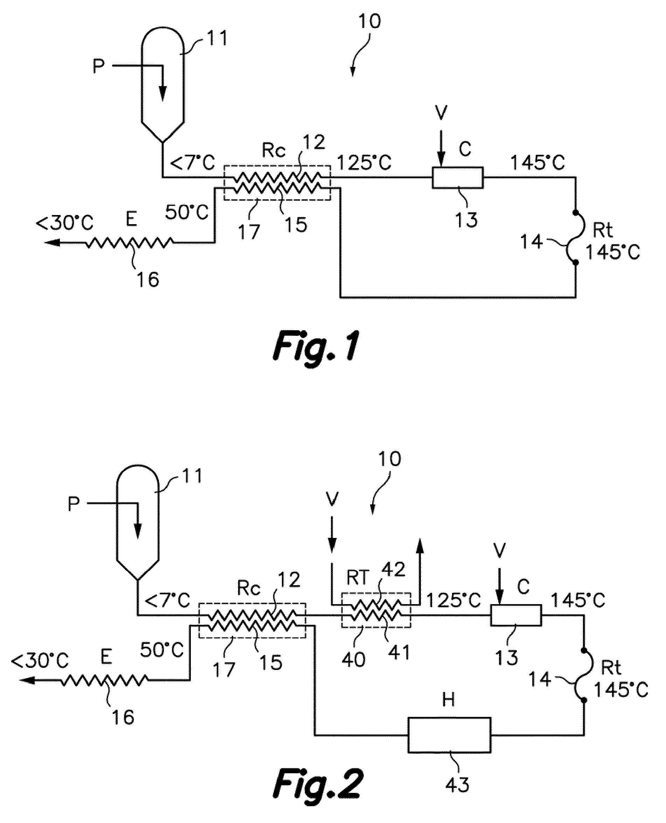

With reference to Figure 1, the reference sign 10 generally designates an open sterilization circuit provided with an inlet and an outlet (indicated by means of arrows in Figure 1), in relation to which a sterilization process for sterilizing vegetable liquid food products according to an embodiment of the present invention is illustrated. The sterilization process essentially comprises the following steps.

First, the liquid product P to be sterilized is introduced into the sterilization circuit 10 at a relatively low inlet temperature, generally less than 7°C, for example 4°C, through an inlet tank 11.

Then the liquid product P passes through a heat exchanger 17 where a heat recovery step Rc takes place by heat exchange between the recently introduced liquid product P, which circulates through a cold exchanger conduit 12 and is at the inlet temperature less than 7°C, and an already sterilized liquid product P, which is led towards the outlet of the sterilization circuit 10 through a hot exchanger conduit 15 and is at a sterilization temperature, for example 145°C, as described below. By means of this heat recovery step Rc, the temperature of the recently introduced liquid product P increases from the inlet temperature less than 7°C to an increased temperature, for example 125°C.

Next, the liquid product P coming from the heat exchanger 17 passes through a steam injector 13 by means of which a steam V is injected into the conduit where the liquid product P circulates and is mixed with the liquid product P. By means of this injection of steam, a heating step C takes place whereby the temperature of the liquid product P increases from the increased temperature, 125°C in this example, to the sterilization temperature, 145°C in this example, while at the same time the liquid product P is diluted due to the effect of the added steam.

The liquid product P coming from the steam injector 13 then passes through a holding cell 14 where the liquid product P is subjected to a temperature holding step Rt consisting of maintaining the sterilization temperature reached in the heating step C, which is 145°C in this example, for a pre-established hold time, which can vary from around one second up to one minute or more, depending on the nature of the liquid product P and on the sterilization temperature, among other factors. The heating step C in combination with this temperature holding step Rt causes the inactivation of enzymes and viable microorganisms, with their spores, thereby the liquid product P is sterilized.

The sterilized liquid product P is led from the holding cell 14 again to the heat exchanger 17 where the aforementioned heat exchange takes place between the sterilized liquid product P, which circulates through the hot exchanger conduit 15 and is at the sterilization temperature, 145°C in this example, and the recently introduced liquid product P, which circulates through the cold exchanger conduit 12 and is at the inlet temperature less than 7°C. This heat exchange causes cooling in the sterilized liquid product P from the sterilization temperature, 145°C in this example, to a reduced temperature, for example 50°C, and the heat lost through the sterilized liquid product P is transferred to the recently introduced liquid product P, which experiences the increase in temperature described above in relation to the heat recovery step Rc.

Finally, the sterilized liquid product P is led from the heat exchanger 17 to the outlet of the sterilization circuit 10 through a cooling device 16 where the liquid product P experiences a cooling step E whereby it is cooled from the reduced temperature, 50°C in this example, to an outlet temperature close to room temperature, and generally less than 30°C.

It must be pointed out that the temperature profile described above and shown in Figure 1 is provided only by way of theoretical example and is merely illustrative.

The passage of the liquid product through a holding cell 14 is not essential if the increase in temperature caused by the injection of steam V is sufficient by itself for assuring sterilization of the liquid product, in which case the temperature holding step Rt can be omitted.

In the sterilization process of the present invention, the sterilized liquid product P is led from the holding cell 14 directly to the hot exchanger conduit 15 without being subjected to a flash evaporation step such as the one performed in the direct UHT process, so a certain amount of water that is added to the liquid product P in the injection of steam V step remains in the sterilized liquid product P until the outlet of the sterilization circuit 10. This certain amount of water added comes from the condensation of the steam V which is mixed with the liquid product P.

To prevent the sterilized liquid product P from having a dilution greater than desired, the sterilization process of the present invention comprises first defining a target outlet concentration at which the sterilized liquid product P is to be obtained at the outlet of the sterilization circuit 10, then determining an inlet concentration at which the liquid product P to be sterilized must be introduced into the sterilization circuit 10 in order to obtain the sterilized liquid product P at the target outlet concentration taking into account the amount of water that will be added to the liquid product P in the injection of steam V step, and then introducing the liquid product P to be sterilized into the inlet of the sterilization circuit 10 at the determined inlet concentration.

For the purpose of the present invention, the mentioned heat recovery step Rc occurring in the heat exchanger 17 is not essential, though it is very convenient.

When performing the process, the flow rate of the liquid product P at the inlet or at the outlet of the sterilization circuit 10 is kept constant and the steam injector 13 is controlled such that the amount of water added to the liquid product P is constant.

Figure 2 shows an alternative sterilization circuit in relation to which a sterilization process for sterilizing vegetable liquid food products according to another alternative embodiment of the present invention is illustrated.

The sterilization circuit shown in Figure 2 is analogous to the one shown in Figure 1, except in that it includes an additional heat exchanger 40 located between the heat exchanger 17 and the steam injector 13 and a homogenizer 43 located between the holding cell 14 and the heat exchanger 17. Alternatively, the homogenizer 43 can be at a half-way point of the heat recovery step Rc in the circuit of outlet.

A temperature regulation RT step takes place in the additional heat exchanger 40 by heat exchange between a high-temperature fluid, such as, for example, steam V or water or another fluid overheated by steam or by another system, circulating through a conduit 42, and the liquid product P circulating through a conduit 41. By means of this temperature regulation RT step it is assured that the increased temperature of the liquid product P reaching the steam injector 13, 125°C in this example, is kept constant over time.

In the homogenizer 43, which can be a conventional type homogenizer, the liquid product P is subjected to a homogenization step H.

Therefore, by keeping the inlet or outlet flow rate constant, by keeping the increased temperature of the liquid product P reaching the steam injector 13 constant, by controlling the steam injector 13 such that the amount of water added to the liquid product P is constant, and by subjecting the liquid product P to a homogenization step H by means of a homogenizer 43 before the outlet, the sterilized liquid product P that is obtained is homogenous and stable over time.

## Claims

1. A sterilization process for sterilizing vegetable liquid food products, comprising the steps of:
introducing a liquid product (P) to be sterilized at an inlet temperature into an inlet of a sterilization circuit (10);
heating the liquid product (P) to a sterilization temperature by the injection of steam (V) into a conduit of the sterilization circuit (10) where the liquid product (P) circulates, whereby said liquid product (P) is sterilized;
cooling the sterilized liquid product (P) to an outlet temperature close to room temperature in a cooling device (16) located before an outlet of the sterilization circuit (10).
**characterized in that** the sterilization process comprises:
keeping an amount of water that has been added to the liquid product (P) by said injection of steam (V) into the sterilized liquid product (P) until said outlet of the sterilization circuit (10);
defining a target outlet concentration at which the sterilized liquid product (P) is to be obtained at the outlet of the sterilization circuit (10);
determining an inlet concentration at which the liquid product (P) to be sterilized must be introduced into the sterilization circuit (10) in order to obtain the sterilized liquid product (P) at said target outlet concentration taking into account said amount of water that has been added to the liquid product (P) by the injection of steam (V); and
introducing the liquid product (P) to be sterilized into said inlet of the sterilization circuit (10) at said inlet concentration.

2. The sterilization process according to claim 1, wherein the liquid product (P) is kept at the sterilization temperature for a pre-established hold time in a holding cell (14) of the sterilization circuit (10).

3. The sterilization process according to claim 1 or 2, further including a heat recovery step (Rc) comprising heat exchange between the recently introduced liquid product (P) that is at the inlet temperature in a cold exchanger conduit (12) of the sterilization circuit (10) and the sterilized liquid product (P) that is at the sterilization temperature in a hot exchanger conduit (15) of the sterilization circuit (10).

4. The sterilization process according to claim 3, wherein said heat recovery step (Rc) causes an increase in the temperature of the recently introduced liquid product (P) from the inlet temperature to an increased temperature before the injection of steam step (V) and a reduction of the temperature of the sterilized liquid product (P) from the sterilization temperature to a reduced temperature before the final cooling step (E).

5. The sterilization process according to any one of the preceding claims, wherein the flow rate of the liquid product (P) at the inlet or at the outlet of the sterilization circuit (10) is kept constant over time.

6. The sterilization process according to any one of the preceding claims, wherein an amount of water added to the liquid product (P) by the injection of steam (V) is constant over time.

7. The sterilization process according to any one of the preceding claims, wherein the liquid product (P) is subjected to a temperature regulation step (RT) by heat exchange between a high-temperature fluid circulating through a conduit (42) and the liquid product (P) circulating through a conduit (41) before the injection of steam (V).

8. The sterilization process according to any one of the preceding claims, wherein the liquid product (P) is subjected to a homogenization step (H) before the outlet of the sterilization circuit (10).
